(19) **Europäisches Patentamt**
**European Patent Office**
**Office européen des brevets**

(11) **EP 1 726 134 B1**

(12) **EUROPÄISCHE PATENTSCHRIFT**

(45) Veröffentlichungstag und Bekanntmachung des Hinweises auf die Patenterteilung:
**12.12.2007 Patentblatt 2007/50**

(21) Anmeldenummer: **05801269.1**

(22) Anmeldetag: **25.10.2005**

(51) Int Cl.:
*H04L 12/56* (2006.01)   *H04L 12/28* (2006.01)

(86) Internationale Anmeldenummer:
**PCT/EP2005/055523**

(87) Internationale Veröffentlichungsnummer:
**WO 2006/066989 (29.06.2006 Gazette 2006/26)**

(54) **VERFAHREN ZUR DATENÜBERTRAGUNG ZWISCHEN EINER SENDENDEN UND EINER EMPFANGENDEN EINHEIT IN EINEM BLUETOOTH-FUNKKOMMUNIKATIONSSYSTEM**

METHOD FOR TRANSMITTING DATA BETWEEN A TRANSMITTING AND A RECEIVING UNIT IN A BLUETOOTH RADIO COMMUNICATION SYSTEM

PROCEDE DE TRANSMISSION DE DONNEES ENTRE UNE UNITE EMETTRICE ET UNE UNITE RECEPTRICE DANS UN SYSTEME DE RADIO COMMUNICATION BLUETOOTH

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.12.2004 DE 102004061934**

(43) Veröffentlichungstag der Anmeldung:
**29.11.2006 Patentblatt 2006/48**

(73) Patentinhaber: **SIEMENS AKTIENGESELLSCHAFT**
**80333 München (DE)**

(72) Erfinder:
• **AMON, Peter**
**85591 Vaterstetten (DE)**

• **KUTSCHENREUTER, Matthias**
**80809 München (DE)**

(56) Entgegenhaltungen:
**EP-A- 1 271 853      WO-A-01/41348**
**US-B1- 6 731 939**

• **JOHANSSON P ET AL: "SHORT RANGE BASED AD-HOC NETWORKING: PERFORMANCE AND PROPERTIES" ICC '99. 1999 IEEE INTERNATIONAL CONFERENCE ON COMMUNICATIONS. CONFERENCE RECORD. VANCOUVER, CA, JUNE 6 - 10, 1999, IEEE INTERNATIONAL CONFERENCE ON COMMUNICATIONS, NEW YORK, NY : IEEE, US, Bd. VOL. 3, 6. Juni 1999 (1999-06-06), Seiten 1414-1420, XP000903607 ISBN: 0-7803-5285-8**

## EP 1 726 134 B1

**Beschreibung**

Die Erfindung betrifft ein Verfahren zur Datenübertragung zwischen einer sendenden und einer empfangenden Einheit in einem Bluetooth-Funkkommunikationssystem gemäß dem Oberbegriff des Patentanspruchs 1.

Es sind so genannte Bluetooth-"Scatternetze" bekannt, bei denen zwei oder mehr Bluetooth-Piconetze verbunden sind. Je zwei Piconetze werden dabei durch eine den beiden Piconetzen gemeinsam zugeordnete Verbindungseinheit miteinander verbunden. Jedes Piconetz beinhaltet dabei eine als "Master" bezeichnete steuernde Einheit, die bis zu sieben als "Slave" bezeichnete Einheiten steuern kann. Somit umfasst ein Piconetz bis zu maximal acht Einheiten.

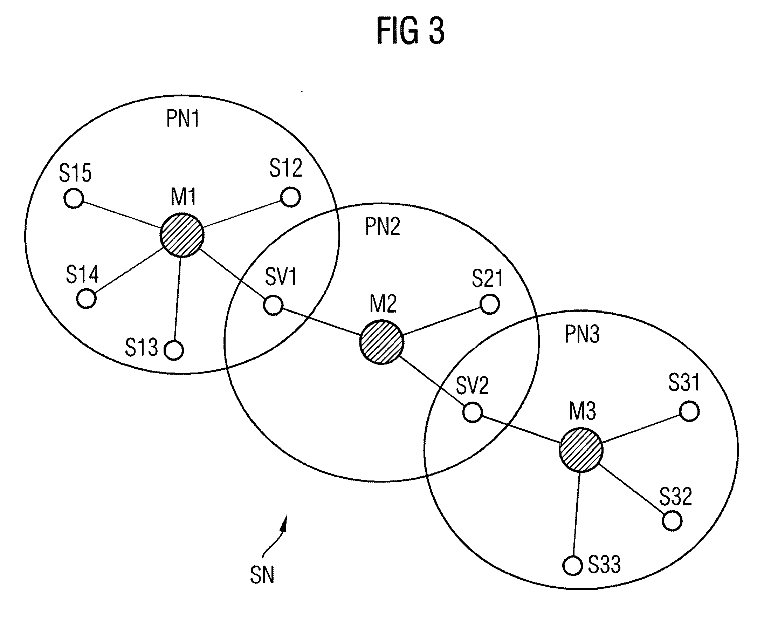

FIG 3 zeigt ein beispielhaftes Scatternetz SN gemäß dem Stand der Technik, das drei Piconetze PN1, PN2 und PN3 umfasst.

Ein erstes Piconetz PN1 beinhaltet eine steuernde Einheit M1 sowie fünf gesteuerte Einheiten SV1, S12, S13, S14 und S15. Jede Datenübertragung erfolgt innerhalb des ersten Piconetzes PN1 über die steuernde Einheit M1. Entsprechend weist ein zweites Piconetz PN2 eine steuernde Einheit M2 sowie drei gesteuerte Einheiten SV1, S21 und SV2 auf. Jede Datenübertragung erfolgt innerhalb des zweiten Piconetzes PN2 über die steuernde Einheit M2.

Das erste Piconetz PN1 und das zweite Piconetz PN2 werden über die nachfolgend als Verbindungseinheit bezeichnete gesteuerte Einheit SV1 verbunden. Jede Datenübertragung zwischen dem ersten Piconetz PN1 und dem zweiten Piconetz PN2 erfolgt über die Verbindungseinheit SV1, die den beiden Piconetzen PN1, PN2 gemeinsam zugeordnet ist.

Ein drittes Piconetz PN3 weist eine steuernde Einheit M3 sowie vier gesteuerte Einheiten SV2, S31, S32 und S33 auf. Jede Datenübertragung innerhalb des dritten Piconetzes PN3 wird über die steuernde Einheit M3 durchgeführt.

Das zweite Piconetz PN2 und das dritte Piconetz PN3 werden über die nachfolgend als Verbindungseinheit bezeichnete gesteuerte Einheit SV2 verbunden, die den beiden Piconetzen PN2, PN3, gemeinsam zugeordnet ist. Jede Datenübertragung zwischen dem zweiten Piconetz PN2 und dem dritten Piconetz PN3 erfolgt über die Verbindungseinheit SV2.

Jede der beiden Verbindungseinheiten SV1 und SV2 ist jeweils zwei Piconetzen zugeordnet. Je nach Betriebsart der jeweiligen Verbindungseinheit wird zwischen einer so genanten "Slave-Slave-Bridge" und einer so genannten "Slave-Master-Bridge" unterschieden. Im ersten Fall wird die Verbindungseinheit in beiden Piconetzen jeweils als "Slave", d.h. als gesteuerte Einheit, betrieben. Im zweiten Fall wird die Verbindungseinheit in einem ersten Piconetz als "Slave" und in einem zweiten Piconetz als "Master", d.h. als steuernde Einheit, betrieben.

Bluetooth-Funkkommunikationsendgeräte bzw. Bluetooth-Einheiten verwenden zur Datenübertragung ein "Frequency-Hopping"-Verfahren mit einem Frequenzmuster und verfügen für Sende- und Empfangszwecke lediglich über einen Transceiver.

Dadurch ist eine betrachtete Verbindungseinheit gezwungen, den Transceiver auf ein erstes Frequenzmuster für Datenübertragungen eines ersten Piconetzes und den Transceiver auf ein zweites Frequenzmuster für Datenübertragungen eines zweiten Piconetzes abzustimmen. Der Transceiver der Verbindungseinheit wird mit einem Zeitmultiplexverfahren betrieben.

Innerhalb eines betrachteten Piconetzes ist eine Übertragung von zeitkritischen Daten, beispielsweise im Rahmen einer Videotelefonie-Anwendung oder im Rahmen einer Videoübertragung, aufgrund der geringen Anzahl beteiligter Bluetooth-Einheiten nahezu problemlos realisierbar.

Bei der Übertragung von zeitkritischen Daten innerhalb eines Scatternetzes, also bei einer Datenübertragung zwischen Bluetooth-Einheiten, die verschiedenen Bluetooth-Piconetzen des Scatternetzes zugeordnet sind, kann es aufgrund der größeren Anzahl der zur Datenübertragung benötigten Bluetooth-Einheiten zu Problemen kommen.

So kann es beispielsweise bei einer Videobild-Datenübertragung bei einer Einheit, die das Videobild empfängt und wiedergibt, zu Störungen bzw. zu Aussetzern bei der Videobildanzeige kommen. Dies wird durch die begrenzten Speicherkapazitäten sowohl bei der empfangenden Einheit als auch bei weiteren Bluetooth-Einheiten, die zur Datenübertragung des Videobilds von einer aufnehmenden Einheit zur wiedergebenden Einheit benötigt werden, verursacht.

Aufgrund der begrenzten Speicherkapazität kommt es bei der Datenübertragung zu Speicherüberläufen und/ oder zu Speicherleerständen, wodurch der Videodatenstrom nicht kontinuierlich von der wiedergebenden Einheit decodiert werden kann.

Diese Störungen im idealerweise kontinuierlich übertragenen Datenstrom werden als "Jitter" oder als "Gleichlaufschwankungen" bezeichnet. Je größer die Gleichlaufschwankungen sind, desto größer sind die angezeigten Bildschwankungen seitens der zweiten Einheit.

Eine europäische Patentanmeldung EP 1 271 853 A2 beschäftigt sich mit einer Kommunikationseinrichtung, Methode und System für Bluetooth zur Verringerung von Interferenzen.

Es ist daher Aufgabe der vorliegenden Erfindung, ein hinsichtlich der Gleichlaufschwankungen verbessertes Verfahren für eine zeitkritische Datenübertragung zwischen zwei Bluetooth-Einheiten, die jeweils unterschiedlichen Piconetzen eines Scatternetzes zugeordnet sind, anzugeben.

Diese Aufgabe wird durch die Merkmale des Patentanspruchs 1 gelöst. Vorteilhafte Weiterbildungen sind in den Unteransprüchen angegeben.

Beim erfindungsgemäßen Verfahren erfolgt eine Datenübertragung zwischen einer sendenden und einer empfangenden Einheit in einem Bluetooth-Funkkommunikationssystem, wobei die sendende und die empfangende Einheit jeweils unterschiedlichen Piconetzen zugeordnet sind. Die Datenübertragung wird zwischen jeweils zwei Piconetzen über eine den beiden Piconetzen gemeinsam zugeordnete Verbindungseinheit als Datenstrom durchgeführt.

Die Verbindungseinheit empfängt während einer ersten Verbindungszeitdauer Daten eines zugeordneten ersten Piconetzes und überträgt diese Daten während einer nachfolgenden zweiten Verbindungszeitdauer an ein zugeordnetes zweites Piconetz.

Die sendende Einheit ordnet der Datenübertragung einen Dienstqualitätswert zu und bestimmt anhand des Dienstqualitätswerts eine Verbindungszeitdauer als Startwert, die als erste und zweite Verbindungszeitdauer jeder Verbindungseinheit, die zur Durchführung der Datenübertragung verwendet wird, mitgeteilt wird.

Für den Datenstrom wird ein Gleichlaufschwankungswert ermittelt, der den Datenstrom hinsichtlich einer gleichmäßigen Datenübertragung bewertet. An jeder an der Datenübertragung beteiligten Verbindungseinheit wird in Abhängigkeit vom ermittelten Gleichlaufschwankungswert die jeweilige erste und zweite Verbindungszeitdauer eingestellt.

Die Ermittlung des Gleichlaufschwankungswerts kann dabei seitens der empfangenden Einheit bzw. nach einem Austausch entsprechender Informationen seitens der sendenden Einheit erfolgen.

Das erfindungsgemäße Verfahren ist insbesondere für zeitkritische Datenübertragungen innerhalb eines Bluetooth-Scatternetzes anwendbar.

Mit Hilfe des erfindungsgemäßen Verfahrens werden zeitkritische Anwendungen wie Videotelefonie oder Videoüberwachung in einem Bluetooth-Scatternetz ohne empfangsseitige Bildschwankungen realisierbar.

Nachfolgend wird die Erfindung anhand einer Zeichnung näher erläutert. Dabei zeigen:

FIG 1    das erfindungsgemäße Verfahren anhand eines Scatternetzes, das drei Piconetze aufweist,

FIG 2    einen Datenstrom mit verschiedenen Gleichlaufschwankungswerten, und

FIG 3    das in der Beschreibungseinleitung beschriebene Scatternetz gemäß dem Stand der Technik.

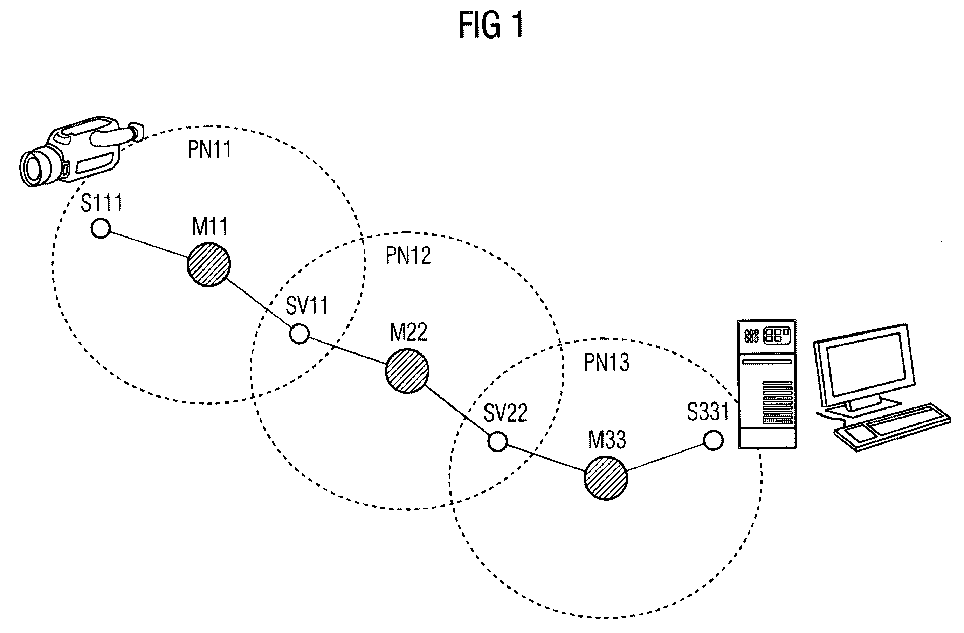

FIG 1 zeigt das erfindungsgemäße Verfahren anhand eines Scatternetzes, das drei Piconetze PN1, PN2 und PN3 aufweist.

Ein erstes Piconetz PN11 beinhaltet eine steuernde Einheit M11 sowie zwei gesteuerte Einheiten S111 und SV11, wobei als gesteuerte Einheit S111 eine Videokamera verwendet wird.

Ein zweites Piconetz PN12 beinhaltet eine steuernde Einheit M22 sowie zwei gesteuerte Einheiten SV11 und SV22. Ein drittes Piconetz PN13 weist eine steuernde Einheit M33 sowie zwei gesteuerte Einheiten SV22 und S331 auf, wobei als gesteuerte Einheit S331 ein Computer-Terminal für eine Videobildanzeige verwendet wird.

Das erste Piconetz PN11 und das zweite Piconetz PN12 werden über die nachfolgend als Verbindungseinheit bezeichnete gesteuerte Einheit SV11 verbunden, so dass jede Datenübertragung zwischen den beiden Piconetzen PN11 und PN12 über die Verbindungseinheit SV11 erfolgt.

Das zweite Piconetz PN12 und das dritte Piconetz PN13 werden über die nachfolgend als Verbindungseinheit bezeichnete gesteuerte Einheit SV22 verbunden, so dass jede Datenübertragung zwischen den beiden Piconetzen PN2 und PN3 über die Verbindungseinheit SV22 durchgeführt wird.

Im Rahmen einer durchzuführenden Videoüberwachung werden zeitkritische Daten als Datenstrom zwischen den Einheiten S111 und S331 übertragen.

Die sendende erste Einheit S111 ordnet der Datenübertragung einen Dienstqualitätswert zu, wobei als Dienstqualitätswert beispielsweise ein vorbestimmter Gleichlaufschwankungswert ("Jitter") verwendet wird. Dieser Gleichlaufschwankungswert darf für eine gleichmäßige Videobildanzeige ohne Bildschwankungen einen maximalen Wert nicht überschreiten.

Nachfolgend wird basierend auf einem Gleichlaufschwankungswert JIT ein zugeordnetes Verbindungszeitintervall VZI beispielhaft unter Verwendung der folgenden Formel ermittelt:

$$\mathtt{VZI \ = \ (JI-1,4)*100 \ /(30-1,4)+4}$$

mit:

VZI    als Verbindungszeitintervall, und

JI    als Gleichlaufschwankungswert, der auch als "Root Mean Square, RMS"-Jitter bezeichnet wird.

Eine Verbindungszeitdauer VZD wird daraus beispielsweise anhand folgender Formel bestimmt:

$$VZD = (VZI-4)/2$$

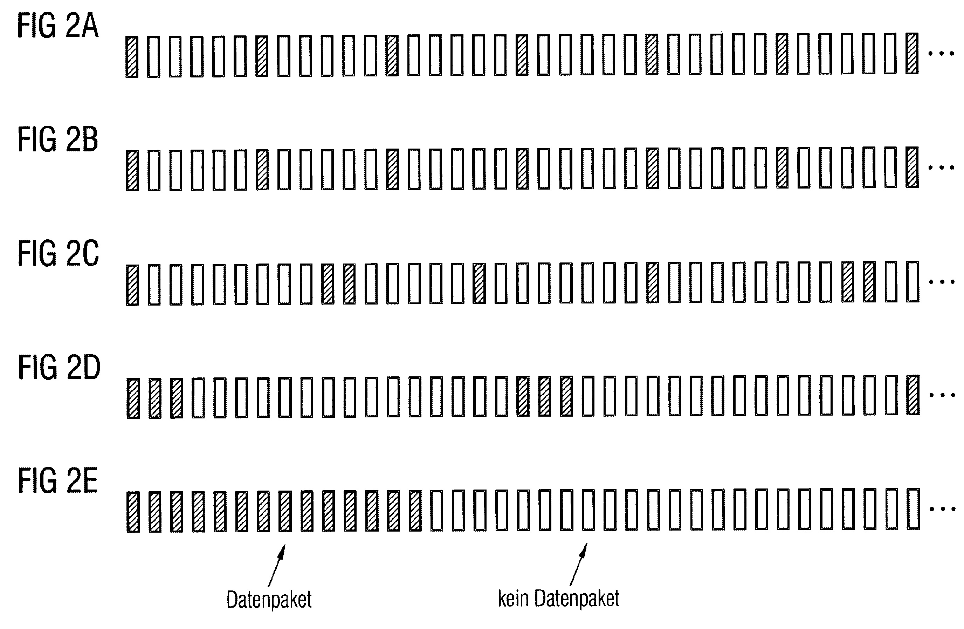

FIG 2 zeigt einen Datenstrom mit verschiedenen Gleichlaufschwankungswerten.

Die FIG 2A zeigt einen gesendeten Datenstrom, während die FIG 2B einen empfangenen Datenstrom mit einem Gleichlaufschwankungswert von "0" zeigt.

FIG 2C zeigt einen empfangenen Datenstrom, der einen Gleichlaufschwankungswert von "2,1" aufweist.

FIG 2D zeigt einen empfangenen Datenstrom, der einen Gleichlaufschwankungswert von "4,1" aufweist.

FIG 2E zeigt einen empfangenen Datenstrom, der einen Gleichlaufschwankungswert von "20,2" aufweist.

**Patentansprüche**

1.  Verfahren zur Datenübertragung zwischen einer sendenden und einer empfangenden Einheit in einem Bluetooth-Funkkommunikationssystem,

    - wobei die sendende und die empfangende Einheit jeweils unterschiedlichen Piconetzen (PN1, PN2, PN3) zugeordnet sind,
    - bei dem die Datenübertragung zwischen jeweils zwei Piconetzen über eine den beiden Piconetzen gemeinsam zugeordnete Verbindungseinheit (SV1, SV2) als Datenstrom durchgeführt wird,
    - bei dem die Verbindungseinheit während einer ersten Verbindungszeitdauer Daten eines zugeordneten ersten Piconetzes empfängt, und
    - bei dem die Verbindungseinheit während einer nachfolgenden zweiten Verbindungszeitdauer die Daten an ein zugeordnetes zweites Piconetz überträgt,

    **dadurch gekennzeichnet,**

    - **dass** die sendende Einheit der Datenübertragung einen Dienstqualitätswert zuordnet und anhand des Dienstqualitätswerts eine Verbindungszeitdauer als Startwert bestimmt, die als erste und zweite Verbindungszeitdauer jeder Verbindungseinheit, die zur Durchführung der Datenübertragung verwendet wird, mitgeteilt wird,
    - **dass** für den Datenstrom ein Gleichlaufschwankungswert ermittelt wird, wobei der Gleichlaufschwankungswert den Datenstrom hinsichtlich einer gleichmäßigen Datenübertragung bewertet, und
    - **dass** an jeder an der Datenübertragung beteiligten Verbindungseinheit in Abhängigkeit vom ermittelten Gleichlaufschwankungswert die jeweilige erste und zweite Verbindungszeitdauer eingestellt wird.

2.  Verfahren nach Anspruch 1, **dadurch gekennzeichnet, dass** die erste und die zweite Verbindungszeitdauer jeder Verbindungseinheit bis zum Erreichen eines minimal vorgegebenen Dienstqualitätswerts oder eines maximal vorgegebenen Gleichlaufschwankungswerts eingestellt wird.

3.  Verfahren nach Anspruch 1 oder 2, **dadurch gekennzeichnet, dass** die empfangende Einheit und/oder die sendende Einheit anhand des ermittelten Gleichlaufschwankungswerts die jeweilige Verbindungszeitdauer bestimmt.

4.  Verfahren nach einem der vorhergehenden Ansprüche, **dadurch gekennzeichnet, dass** die empfangende oder die sendende Einheit den Gleichlaufschwankungswert ermittelt.

5.  Verfahren nach Anspruch 4, **dadurch gekennzeichnet, dass** der Gleichlaufschwankungswert und/oder eine den Gleichlaufschwankungswert repräsentierende Information an die sendende Einheit übertragen wird und die sendende Einheit die jeweiligen Verbindungszeitdauern bestimmt.

6.  Verfahren nach Anspruch 4, **dadurch gekennzeichnet, dass** der Gleichlaufschwankungswert und/oder eine den Gleichlaufschwankungswert repräsentierende Information an jede Verbindungseinheit übertragen wird und die Verbindungseinheit die jeweilige Verbindungszeitdauer bestimmt.

7.  Verfahren nach einem der vorhergehenden Ansprüche, **dadurch gekennzeichnet, dass** die Verbindungszeitdauer oder eine die Verbindungszeitdauer repräsentierende Information an die sendende Einheit zurückgemeldet wird, die das Erreichen des minimal vorgegebenen Dienstqualitätswerts und/oder des maximal vorgegebenen Gleichlaufschwankungswerts überwacht.

8.  Verfahren nach einem der vorhergehenden Ansprüche, **dadurch gekennzeichnet, dass** der Gleichlaufschwankungswert und/oder eine den Gleichlaufschwankungswert repräsentierende Information an die sendende Einheit zurückgemeldet wird, die das Erreichen des minimal vorgegebenen Dienstqualitätswerts und/oder des maximal vorgegebenen Gleichlaufschwankungswerts überwacht.

9.  Verfahren nach einem der vorhergehenden Ansprüche, **dadurch gekennzeichnet, dass** der Dienstqualitätswert und/oder der Gleichlaufschwankungswert direkt oder als zugeordnete Information an die empfangende Einheit übermittelt wird und diese das Erreichen des minimal vorgegebenen Dienstqualitätswerts und/oder des maximal vorgegebenen Gleichlaufschwankungswerts überwacht.

10. Verfahren nach einem der vorhergehenden Ansprüche, **dadurch gekennzeichnet, dass** die sendende Einheit das Erreichen des minimal vorgegebenen Dienstqualitätswerts und/oder des maximal vorgegebenen Gleichlaufschwankungswerts überwacht.

11. Verfahren nach einem der vorhergehenden Ansprüche, **dadurch gekennzeichnet, dass** ein Verbindungszeitintervall anhand folgender Formel ermittelt wird:

$$VZI = (JI-1,4)*100 /(30-1,4)+4$$

mit:

VZI als Verbindungszeitintervall, und mit
JI als Gleichlaufschwankungswert.


## Claims

1.  Method for data transfer between a transmitting and a receiving unit in a Bluetooth wireless communications system,

    - wherein the transmitting and the receiving unit are assigned to different piconets (PN1, PN2, PN3),
    - wherein data transfer between two piconets in each case is carried out as a data stream via a connection unit (SV1, SV2) jointly assigned to both piconets,
    - wherein the connection unit receives data of an assigned first piconet during a first connection period, and
    - wherein the connection unit transmits data to an assigned second piconet during a subsequent second connection period,

    **characterised in that**

    - the transmitting unit assigns the data transfer a quality-of-service value and, on the basis of said quality-of-service value, determines as a starting value a connection period which is communicated as a first and second connection period to each connection unit used for carrying out the data transfer,
    - a jitter value is determined for the data stream, said jitter value evaluating the data stream in respect of uniform data transfer, and
    - on each connection unit involved in the data transfer, the relevant first and second connection period is adjusted as a function of the jitter value determined.

2.  Method according to claim 1,
    **characterised in that** the first and the second connection period of each connection unit is adjusted until a minimum specified quality-of-service value or a maximum specified jitter value is attained.

3.  Method according to claim 1 or 2,
    **characterised in that** the receiving unit and/or the transmitting unit determines the relevant connection period on the basis of the jitter value determined.

**4.** Method according to one of the preceding claims,
**characterised in that** the receiving or the transmitting unit determines the jitter value.

**5.** Method according to claim 4,
**characterised in that** the jitter value and/or information representing the jitter value is transferred to the transmitting unit, and the transmitting unit determines the relevant connection periods.

**6.** Method according to claim 4,
**characterised in that** the jitter value and/or information representing the jitter value is transferred to each connection unit, and the connection unit determines the relevant connection period.

**7.** Method according to one of the preceding claims,
**characterised in that** the connection period or information representing the connection period is reported back to the transmitting unit which monitors the attainment of the minimum specified quality-of-service value and/or of the maximum specified jitter value.

**8.** Method according to one of the preceding claims,
**characterised in that** the jitter value or information representing the jitter value is reported back to the transmitting unit which monitors the attainment of the minimum specified quality-of-service value and/or of the maximum specified jitter value.

**9.** Method according to one of the preceding claims,
**characterised in that** the quality-of-service value and/or the jitter value is communicated directly or as assigned information to the receiving unit and the latter monitors the attainment of the minimum specified quality-of-service value and/or of the maximum specified jitter value.

**10.** Method according to one of the preceding claims,
**characterised in that** the transmitting unit monitors the attainment of the minimum specified quality-of-service value and/or of the maximum specified jitter value.

**11.** Method according to one of the preceding claims,
**characterised in that** a connection time interval is determined using the following formula:

$$VZI = (JI-1.4)*100 / (30-1.4)+4$$

where

VZI is the connection time interval, and
JI is the jitter value.

**Revendications**

**1.** Procédé de transmission de données entre une unité émettrice et une unité réceptrice dans un système de radiocommunication Bluetooth,

- l'unité émettrice et l'unité réceptrice étant attribuées respectivement à différents picoréseaux (PN1, PN2, PN3),
- dans lequel la transmission de données entre respectivement deux picoréseaux est effectuée par une unité de liaison (SV1, SV2) attribuée conjointement aux deux picoréseaux sous forme de flux de données,
- dans lequel l'unité de liaison reçoit pendant une première durée de liaison des données d'un premier picoréseau attribué, et
- dans lequel l'unité de liaison transmet pendant une seconde durée de liaison consécutive les données à un second picoréseau attribué,

**caractérisé en ce que**

- l'unité émettrice attribue une valeur de qualité de service à la transmission de données et détermine à l'aide de la valeur de qualité de service une durée de liaison comme valeur de démarrage, qui est utilisée comme première et seconde durées de liaison à chaque unité de liaison, qui est utilisée pour la mise en oeuvre de la transmission de données,

- **en ce que** une valeur de variation du synchronisme est déterminée pour le flux de données, la valeur de variation du synchronisme évaluant le flux de données en ce qui concerne une transmission de données régulière et

- **en ce que**, sur chaque unité de liaison concernée par la transmission de données, la première et la seconde durées de liaison respectives sont réglées en fonction de la valeur déterminée de variation du synchronisme.

2. Procédé selon la revendication 1, **caractérisé en ce que** la première et la seconde durées de liaison de chaque unité de liaison sont réglées jusqu'à atteindre une valeur de qualité de service minimale prédéfinie ou une valeur maximale prédéfinie de variation du synchronisme.

3. Procédé selon la revendication 1 ou 2, **caractérisé en ce que** l'unité réceptrice et/ou l'unité émettrice détermine (nt) la durée de liaison respective à l'aide de la valeur déterminée de variation du synchronisme.

4. Procédé selon l'une quelconque des revendications précédentes, **caractérisé en ce que** l'unité réceptrice ou l'unité émettrice détermine la valeur de variation du synchronisme.

5. Procédé selon la revendication 4, **caractérisé en ce que** la valeur de variation du synchronisme et/ou une information représentant la valeur de variation du synchronisme est transmise à l'unité émettrice et l'unité émettrice détermine les durées de liaison respectives.

6. Procédé selon la revendication 4, **caractérisé en ce que** la valeur de variation du synchronisme et/ou une information représentant la valeur de variation du synchronisme est transmise à chaque unité de liaison et l'unité de liaison détermine la durée de liaison respective.

7. Procédé selon l'une quelconque des revendications précédentes, **caractérisé en ce que** la durée de liaison ou une information représentant la durée de liaison est retournée à l'unité émettrice, qui vérifie si la valeur de qualité de service minimale prédéfinie est atteinte et/ou si la valeur maximale prédéfinie de variation du synchronisme est atteinte.

8. Procédé selon l'une quelconque des revendications précédentes, **caractérisé en ce que** la valeur de variation du synchronisme et/ou une information représentant la valeur de variation du synchronisme est retournée à l'unité émettrice qui vérifie si la valeur de qualité de service minimale prédéfinie et/ou si la valeur maximale prédéfinie de variation de synchronisme est/sont atteinte(s).

9. Procédé selon l'une quelconque des revendications précédentes, **caractérisé en ce que** la valeur de qualité de service et/ou la valeur de variation du synchronisme est déterminée directement ou comme information attribuée à l'unité réceptrice et si celle-ci vérifie si la valeur minimale prédéfinie de qualité de service et/ou la valeur maximale prédéfinie de variation du synchronisme est/sont atteinte(s).

10. Procédé selon l'une quelconque des revendications précédentes, **caractérisé en ce que** l'unité émettrice vérifie si la valeur minimale prédéfinie de qualité de service et/ou la valeur maximale prédéfinie de variation du synchronisme est/sont atteinte(s).

11. Procédé selon l'une quelconque des revendications précédentes, **caractérisé en ce qu'**un intervalle de temps de liaison est déterminé à l'aide de la formule suivante:

```
Vzi = (JI-1,4)*100 / (30-1,4) +4
```

avec :

VZI comme intervalle de temps de liaison, et avec
JI comme valeur de variation du synchronisme.

# FIG 1

EP 1 726 134 B1

FIG 2A

FIG 2B

FIG 2C

FIG 2D

FIG 2E

Datenpaket                    kein Datenpaket

# FIG 3

EP 1 726 134 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1271853 A2